# EUROPEAN PATENT SPECIFICATION

(11) **EP 3 726 342 B1**
(45) Date of publication and mention of the grant of the patent: **12.04.2023**
(21) Application number: 18888631.1
(22) Date of filing: 12.12.2018
(51) Int. Cl.: G06F 3/01, B60K 35/00, B60R 22/48, B60W 40/08, B60W 50/14

(54) **HUMAN-VEHICLE INTERACTION METHOD AND SYSTEM**
VERFAHREN UND SYSTEM ZUR INTERAKTION ZWISCHEN MENSCH UND FAHRZEUG
PROCÉDÉ ET SYSTÈME D'INTERACTION HOMME-VÉHICULE

(30) Priority: 15.12.2017 CN 201711353827; 18.04.2018 CN 201810346945
(43) Date of publication of application: 21.10.2020
(73) Proprietor: NIO (Anhui) Holding Co., Ltd., Hefei City, Anhui Province (CN)
(72) Inventor: CHEN, Yingrui, Shanghai (CN)
(74) Representative: Vossius & Partner Patentanwälte Rechtsanwälte mbB
(86) International application number: PCT/CN2018/120432
(87) International publication number: WO 2019/114718

(56) References cited:
- EP-A2- 1 323 586
- CN-A- 103 309 356
- CN-A- 103 324 100
- CN-A- 103 324 100
- CN-A- 104 252 179
- CN-A- 105 584 412
- CN-A- 105 584 412
- CN-A- 106 803 423
- CN-A- 108 664 123

## Description

### Technical Field

The invention relates to the technical field of vehicles, and in particular to a human-vehicle interaction method, an apparatus, an onboard intelligent controller, and an onboard intelligent control system.

### Background Art

With the development of vehicle technologies, consumers no longer just focus on performance of a vehicle itself, but begin to pay more and more attention to interaction experience between humans and the vehicle during driving. In the prior art, human-vehicle interaction is mainly based on simple interaction of a traditional multimedia system. There are few opportunities of interaction between a user and a vehicle and an interaction scheme is not intelligent enough, resulting in poor user experience. European patent application EP1323586A2 disclosed a drive controller (14) for controlling to change the orientation of a display surface of a display (11) in accordance with the seating position of occupants (7,8) aboard a vehicle (1). A display unit is rotatably mounted on a vehicle. A controller automatically rotates the display unit to a first position where the display surface is oriented toward a driver seat (2), when an occupant (7) is seated solely in the driver seat. The controller rotates the display unit to a third position where the display surface is oriented toward a front passenger seat (3), when an occupant (8) is seated solely in the front passenger seat. The controller rotates the display unit to a second position where the display surface is oriented toward the middle point between the driver seat and the front passenger seat, on detecting both of the occupants are seated respectively in the driver seat and the front passenger seat. China patent application CN103324100A disclosed an emotion vehicle-mounted robot driven by information. The emotion vehicle-mounted robot driven by information is composed of a smart phone and robot body parts in a joint mode, wherein the smart phone is fixed on a robot body and performs information transmission with the robot body through a data line, the smart phone can give a control instruction to the robot body according to changing of outside information and drive the robot body to rotate, or the mart phone can be made to move forward or backward with the face upwards in the vertical face, and through an App installed on the smart phone, the emotion vehicle-mounted robot driven by information responds to current information in the modes of voice, pictures and expressions. Similarly, China patent application CN105584412A disclosed a vehicle door control induction device which comprises a prompting device, a control module and an induction device, wherein the prompting device is used for sending prompting information; the control module is used for controlling the action of the whole induction prompting device and editing the prompting information; the induction device is used for feeding the state information of a target object back to the control module; the induction device is arranged on a door handle; and the prompting device and the induction device are connected with the control module. However, as the user imposes a higher requirement on driving experience, how to provide an efficient and intelligent human-vehicle interaction scheme is a problem that those skilled in the art need to solve at present.

### Summary of the Invention

In order to solve the above problems in the prior art, that is, the problems in the prior art that there are few opportunities of interaction between a user and a vehicle and an interaction scheme is not intelligent enough, one aspect of the invention provides a human-vehicle interaction method, which comprises:
controlling action output and/or information output of an onboard intelligent controller of a vehicle based on acquired vehicle sensor information and/or user behaviour information, so as to interact with a user.

In a preferred technical solution of the above method, for the "action output and/or information output",
the action output comprises rotation of the screen, and/or the body, and/or the head of the onboard intelligent controller; and/or
the information output comprises an expression animation, and/or a voice, and/or text.

According to the invention, the step of "controlling action output and/or information output of an onboard intelligent controller of a vehicle based on acquired vehicle sensor information and/or user behaviour information" comprises:
controlling, if an action of opening a vehicle door is detected and it is detected that a corresponding seat is occupied, the screen of the onboard intelligent controller to turn to the corresponding seat, and optionally display a preset farewell expression animation, and/or output preset farewell voice information, and/or output preset farewell text information;
and/or controlling, if the action of opening the vehicle door is detected and it is detected that the corresponding seat is idle, the screen of the onboard intelligent controller to turn to the vehicle door, and optionally display a preset welcome expression animation, and/or output preset welcome voice information, and/or output preset welcome text information.

In a preferred technical solution of the above method, the step of "controlling action output and/or information output of an onboard intelligent controller of a vehicle based on acquired vehicle sensor information and/or user behaviour information" comprises:
selecting and controlling, according to a rhythm and a style of music played by the vehicle, an expression animation on the screen of the onboard intelligent controller to be displayed according to a preset correspondence relationship.

In a preferred technical solution of the above method, the step of "controlling action output and/or information output of an onboard intelligent controller of a vehicle based on acquired vehicle sensor information and/or user behaviour information" comprises:
controlling, when it is detected that an object is approaching in a preset detection position, the screen of the onboard intelligent controller to turn to the preset detection position.

In a preferred technical solution of the above method, the step of "controlling action output and/or information output of an onboard intelligent controller of a vehicle based on acquired vehicle sensor information and/or user behaviour information" comprises:
controlling, when it is detected that the seat is occupied and the seat belt of the corresponding seat is not fastened during the travelling of the vehicle, the onboard intelligent controller to perform seat belt unfastened reminding, wherein
the seat belt unfastened reminding comprises: the screen of the onboard intelligent controller turns to the corresponding seat, and/or displays a preset seat belt reminding expression animation, and/or outputs preset seat belt reminding voice information, and/or outputs preset seat belt reminding text information.

In a preferred technical solution of the above method, when there are a plurality of seat belt unfastened reminding tasks, the onboard intelligent controller is controlled to perform seat belt unfastened reminding sequentially for a driver seat, a front passenger seat, and back seats from left to right or from right to left.

Another aspect of the invention provides an onboard intelligent controller, comprising:
an acquisition module configured to acquire vehicle sensor information and/or user behaviour information; and
an interaction module configured to control action output and/or information output of an onboard intelligent controller of a vehicle based on the acquired vehicle sensor information and/or user behaviour information, so as to interact with a user.

A third aspect of the invention provides an onboard intelligent control system, comprising an acquisition apparatus, a control apparatus, and an actuation apparatus,
the acquisition apparatus being configured to acquire vehicle sensor information and/or user behaviour information,
the control apparatus being configured to send a control instruction to the actuation apparatus based on the acquired vehicle sensor information and/or user behaviour information, and
the actuation apparatus being configured to control action output and/or information output of an onboard intelligent controller of a vehicle according to the control instruction.

In a preferred technical solution of the above method, for the "action output and/or information output",
the action output comprises rotation of the screen, and/or the body, and/or the head of the onboard intelligent controller; and/or
the information output comprises an expression animation, and/or a voice, and/or text.

According to the invention, the control apparatus further comprises a first control unit and a second control unit, wherein
the first control unit is configured to control, if an action of opening a vehicle door is detected and it is detected that a corresponding seat is occupied, the screen of the onboard intelligent controller to turn to the corresponding seat, and optionally display a preset farewell expression animation, and/or output preset farewell voice information, and/or output preset farewell text information; and
the second control unit is configured to control, if the action of opening the vehicle door is detected and it is detected that the corresponding seat is idle, the screen of the onboard intelligent controller to turn to the vehicle door, and optionally display a preset welcome expression animation, and/or output preset welcome voice information, and/or output preset welcome text information.

In a preferred technical solution of the above scheme, the control apparatus further comprises a third control unit configured to select and control, according to a rhythm and a style of music played by the vehicle, an expression animation on the screen of the onboard intelligent controller to be displayed according to a preset correspondence relationship.

In a preferred technical solution of the above scheme, the control apparatus further comprises a fourth control unit configured to control, when it is detected that an object is approaching in a preset detection position, the screen of the onboard intelligent controller to turn to the preset detection position.

In a preferred technical solution of the above scheme, the control apparatus further comprises a fifth control unit configured to:
control, when it is detected that the seat is occupied and the seat belt of the corresponding seat is not fastened during the travelling of the vehicle, the onboard intelligent controller to perform seat belt unfastened reminding, wherein
the seat belt unfastened reminding comprises: the screen of the onboard intelligent controller turns to the corresponding seat, and/or displays a preset seat belt reminding expression animation, and/or outputs preset seat belt reminding voice information, and/or outputs preset seat belt reminding text information.

In a preferred technical solution of the above scheme, the fifth control unit is further configured to:
control, when there are a plurality of seat belt unfastened reminding tasks, the onboard intelligent controller to perform seat belt unfastened reminding sequentially for a driver seat, a front passenger seat, and back seats from left to right or from right to left. Compared with the closest prior art, the invention provides a human-vehicle interaction method, comprising controlling action output and/or information output of an onboard intelligent controller of a vehicle based on acquired vehicle sensor information and/or user behaviour information, so as to interact with a user.

The above technical solutions have at least the following beneficial effects: According to the method of the invention, corresponding actions and information can be output according to vehicle sensor information and/or user behaviour information, and corresponding information can be displayed for a user behaviour, so that the vehicle can interact with the user well, thereby improving the user experience.

### Brief Description of the Drawings

FIG. 1 is a schematic diagram of a main flow of a human-vehicle interaction method according to an embodiment of the invention;
FIG. 2 is a schematic diagram of a main structure of an onboard intelligent controller according to an embodiment of the invention; and
FIG. 3 is a schematic diagram of a main structure of an onboard intelligent control system according to an embodiment of the invention.

### Detailed Description of Embodiments

To make the objectives, technical solutions, and advantages of the embodiments of the invention clearer, the technical solutions in the embodiments of the invention will be described clearly and completely with reference to the accompanying drawings in the embodiments of the invention.

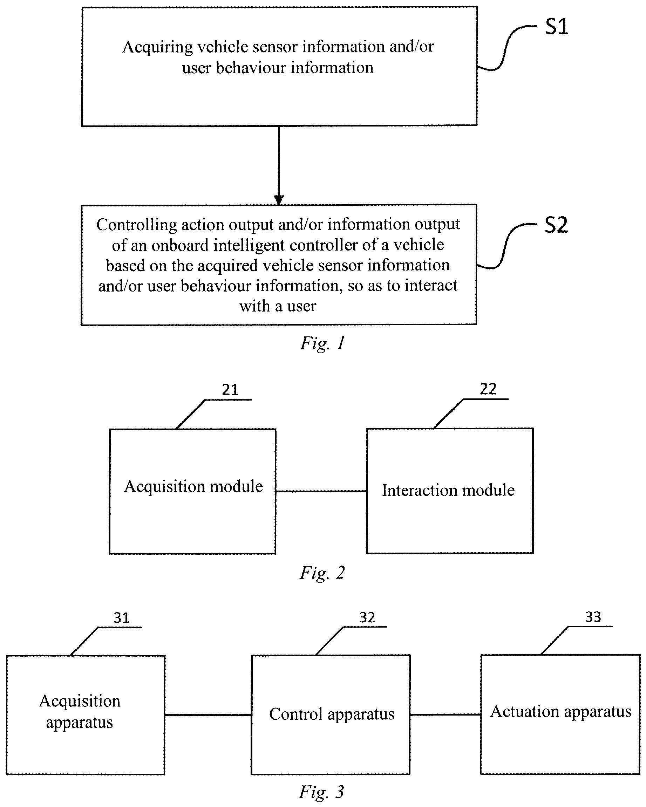

Referring to FIG. 1, FIG. 1 exemplarily shows a main flow of a human-vehicle interaction method in an embodiment. As shown in FIG. 1, the human-vehicle interaction method in this embodiment comprises the following steps:
Step S1: acquiring vehicle sensor information and/or user behaviour information.

In this embodiment, the human-vehicle interaction method is implemented in an onboard intelligent controller. The onboard intelligent controller may be provided with a camera and/or a voice receiving apparatus, or may be connected to a camera and/or a voice receiving apparatus, to observe an expression of a user and receive a voice of the user. The onboard intelligent controller can be directly or indirectly connected to a vehicle sensor in a wired or wireless manner, and can acquire data of the vehicle sensor and/or behaviour information of the user. The onboard intelligent controller may also be connected to an onboard control system such as an electronic control unit (ECU) or a vehicle control unit (VCU) or an onboard computer system of the vehicle, to acquire the data of the vehicle sensor from the vehicle control system.

In a preferred embodiment of the invention, the user behaviour information comprises user gesture information and/or emotion information. The camera built in or connected to the onboard intelligent controller can observe the user behaviour information, which may comprise the user gesture information and/or emotion information. Specifically, the user may implement human-vehicle interaction through gesture control preset by the onboard intelligent controller. For example, in order to play music, the user may slide horizontally from left to right at the front end of the onboard intelligent controller or the camera connected to the onboard intelligent controller. After receiving the user gesture information, the onboard intelligent controller performs a corresponding operation. In this embodiment of the invention, the gesture information may be used to control a multimedia to play a next piece of music. Correspondingly, the user may slide horizontally from right to left to control the multimedia to play a previous piece of music. In addition, the user behaviour information may further comprise the emotion information, and the onboard intelligent controller may display a corresponding expression animation or play music on the screen of the onboard intelligent controller according to the user's emotion to adjust the user's emotion.

Step S2: controlling action output and/or information output of an onboard intelligent controller of a vehicle based on the acquired vehicle sensor information and/or user behaviour information, so as to interact with a user.

In this embodiment, in order to improve the user's interaction experience, an interaction strategy may be preset, and the interaction strategy may be set according to the data acquired by the onboard intelligent controller. A mapping relationship is established between the vehicle sensor information and/or user behaviour information that can be acquired by the onboard intelligent controller and an expression, and/or a voice, and/or text preset in the onboard intelligent controller. When the information acquired by the onboard intelligent controller is determined, corresponding actions and information may be output based on the mapping relationship to interact with the user. In this way, appropriate interaction can be carried out according to a user behaviour, so that the user can experience novelty and also generate the idea that the vehicle "understands me", thereby improving the user experience.

In a preferred embodiment of the invention, for the "action output and/or information output",
the action output comprises rotation of the screen, and/or the body, and/or the head of the onboard intelligent controller; and/or
the information output comprises an expression animation, and/or a voice, and/or text.

In practical applications, the onboard intelligent controller may be installed above the centre console screen of the vehicle and has a rotatable head. The head may be provided with a display screen, and the display screen can display text and expression information, and may have a voice output function or may be connected to a voice output apparatus, such as an onboard audio or speaker. When the onboard intelligent controller interacts with the user according to the acquired information and interaction strategy, the head of the onboard intelligent controller may be rotated to drive the rotation of the display screen, and corresponding text and a corresponding expression animation may be further displayed on the display screen, and/or a corresponding voice may be output to communicate with the user, or the like.

In order to interact with the user more intelligently, the vehicle needs to efficiently and accurately interact with the user according to the existing parameters and the data that can be acquired by the onboard intelligent controller. Specifically, a mapping relationship may be established between preset vehicle sensor information and/or user behaviour information and the expression, and/or the voice, and/or the text preset by the onboard intelligent controller. For example, when preset vehicle sensors are a vehicle door detection sensor and a seat occupancy sensor, and information displayed by the two sensors is that a vehicle door is switched from being closed to being opened and a seat is switched from being occupied to being idle, it may be considered that the user is to leave the vehicle in this case, and the onboard intelligent controller makes a farewell to the user. A mapping relationship is established between the vehicle sensor information, and a farewell expression, a farewell voice and farewell text preset by the onboard intelligent controller, so that the user can feel vehicle intelligence, thereby improving the user experience.

According to the invention, the step of "controlling action output and/or information output of an onboard intelligent controller of a vehicle based on acquired vehicle sensor information and/or user behaviour information" comprises:
controlling, if an action of opening a vehicle door is detected and it is detected that a corresponding seat is occupied, the screen of the onboard intelligent controller to turn to the corresponding seat, and optionally display a preset farewell expression animation, and/or output preset farewell voice information, and/or output preset farewell text information;
and/or controlling, if the action of opening the vehicle door is detected and it is detected that the corresponding seat is idle, the screen of the onboard intelligent controller to turn to the vehicle door, and optionally display a preset welcome expression animation, and/or output preset welcome voice information, and/or output preset welcome text information.

The vehicle sensor information comprises vehicle door opening and closing information, and/or seat occupancy information, and/or multimedia information of the vehicle. Taking the vehicle door opening and closing information and the seat occupancy information as examples, the onboard intelligent controller may be connected to the vehicle door detection sensor and the seat occupancy sensor in a wired or wireless manner. Through acquiring data of the above sensors and analyzing a data change, a corresponding user behaviour is learned or directly acquired, to interact with the user. Specifically, when the onboard intelligent controller acquires data of the vehicle door detection sensor and learns that the vehicle door is opened through analysis, there may be three cases in which the user gets on the vehicle, gets off the vehicle, or stays in the seat. In order to further analyze the user behaviour information, the onboard intelligent controller may acquire data of the seat occupancy sensor. If the onboard intelligent controller learns that the data of the seat occupancy sensor is from an "occupied" state to an "idle" state through analysis, it may be learned that the user is about to get off the vehicle. In this case, the onboard intelligent controller may make a farewell to the user by combining a voice with an expression. Specifically, the farewell to the user may be made by a voice, and displaying a farewell expression on the onboard intelligent controller at the same time. If the onboard intelligent controller learns that the data of the seat occupancy sensor is from the "idle" state to the "occupied" state through analysis, it may be learned that the user is about to get on the vehicle. In this case, the onboard intelligent controller may welcome the user by combining a voice with an expression. For a specific form, reference may be made to the above farewell case, and details will not be descried herein again. If the onboard intelligent controller learns that the data of the seat occupancy sensor is always in the "occupied" state through analysis, it may be learned that the user just opened the vehicle door and did not get off the vehicle. In this case, the onboard intelligent controller may display a happy expression, to provide an intelligent and friendly user experience for the user.

In a preferred embodiment of the invention, the step of "controlling action output and/or information output of an onboard intelligent controller of a vehicle based on acquired vehicle sensor information and/or user behaviour information" may further comprise:
selecting and controlling, according to a rhythm and a style of music played by the vehicle, an expression animation on the screen of the onboard intelligent controller to be displayed according to a preset correspondence relationship.

Multimedia information may be beat per minute (BPM) information and ID3 information (located in bytes at the beginning and the end of an MP3 file, with information such as a singer, a name, and a style of an MP3) of the music. The onboard intelligent control system may acquire relevant information of the music being played by the multimedia, analyze style information of the music being played, and display an expression animation corresponding to the music style on the screen of the onboard intelligent controller, so that the user can resonate with the expression animation while enjoying the music. In addition to the content recorded in this embodiment of the invention, the vehicle sensor information may further comprise information that can be acquired by those skilled in the art based on experience and capabilities, which is not limited herein.

In a preferred embodiment of the invention, the step of "controlling action output and/or information output of an onboard intelligent controller of a vehicle based on acquired vehicle sensor information and/or user behaviour information" may further comprise:
controlling, when it is detected that an object is approaching in a preset detection position, the screen of the onboard intelligent controller to turn to the preset detection position.

In practical applications, a proximity sensor is installed under the centre console screen of the vehicle. When the user's hand or other objects approach the centre console screen, the onboard intelligent controller can control the screen to turn to the detection position, and may display a corresponding smiling face or expression animation on the screen to interact with the user. In this way, when the user controls the centre console screen, the user can have the feeling of interacting with an intelligent robot, thereby improving the user experience.

In a preferred embodiment of the invention, the step of "controlling action output and/or information output of an onboard intelligent controller of a vehicle based on acquired vehicle sensor information and/or user behaviour information" may further comprise:
controlling, when it is detected that the seat is occupied and the seat belt of the corresponding seat is not fastened during the travelling of the vehicle, the onboard intelligent controller to perform seat belt unfastened reminding, wherein
the seat belt unfastened reminding comprises: the screen of the onboard intelligent controller turns to the corresponding seat, and/or outputs a preset seat belt reminding expression animation, and/or outputs preset seat belt reminding voice information, and/or outputs preset seat belt reminding text information.

In a preferred embodiment of the invention, when there are a plurality of seat belt unfastened reminding tasks, reminding is performed sequentially for a driver seat, a front passenger seat, and back seats from left to right or from right to left.

The onboard intelligent controller may further detect sensor information related to the seat belt. When it is detected that the user has not fastened the seat belt, the onboard intelligent controller may use a voice to remind the user to fasten the seat belt, and play a seat belt reminding expression animation and corresponding reminding text information on the screen. In addition, the onboard intelligent controller may further rotate the head and turn the head to a user having not fastened a seat belt to further remind the user. When a plurality of users have not fastened seat belts, the users may be reminded sequentially for a driver seat, a front passenger seat, and back seats from left to right or from right to left until all the users have fastened the seat belts. The user is enabled in a relaxed and entertaining way to fasten the seat belt to ensure driving safety of the user.

In this embodiment of the invention, the centre console screen in various embodiments of the invention is illustratively a display screen with various functions such as cab infotainment, navigation, weather, and mileage display or a combination thereof. In practical applications, the onboard intelligent controller is not limited to being used only on the vehicle, but can also be used in a scenario other than the vehicle. The onboard intelligent controller may be fixedly or detachably installed at a position where the user can be observed. A connection interface of the onboard intelligent controller may be reserved at a position above the centre console screen of the vehicle. The connection interface may be electrically or communicatively connected to the onboard intelligent controller, and the onboard intelligent controller may alternatively be wirelessly connected to the vehicle, which is not limited herein.

In addition, the onboard intelligent controller may be placed in the vehicle as an independent apparatus or used in a scenario other than the vehicle. The onboard intelligent controller may comprise a fixing apparatus, and the fixing apparatus can fix the onboard intelligent controller when the vehicle is travelling or the user is inconvenient to hold it. A circuit interface may be provided inside the fixing apparatus, and the circuit interface may be connected to the connection interface reserved in the vehicle. The onboard intelligent controller may be detachably connected to the fixing apparatus, and exists independently of the fixing apparatus.

The method or algorithm steps described with reference to the embodiments disclosed herein may be implemented by hardware, a software module executed by a processor, or a combination of both. The software module may be arranged in a random access memory (RAM), a memory, a read-only memory (ROM), an electrically programmable ROM, an electrically erasable programmable ROM, a register, a hard disk, a removable disk, a CD-ROM, or any other form of storage medium known in the technical field.

Referring to FIG. 2, FIG. 2 exemplarily shows a main structure of an onboard intelligent controller in an embodiment. As shown in FIG. 2, the onboard intelligent controller in this embodiment comprises:
an acquisition module 21 configured to acquire vehicle sensor information and/or user behaviour information; and
an interaction module 22 configured to control action output and/or information output of an onboard intelligent controller of a vehicle based on the acquired vehicle sensor information and/or user behaviour information, so as to interact with a user.

It will be clearly understood by those skilled in the art that for the convenience and brevity of the description, for the specific working process and related description of the onboard intelligent controller in the embodiment of the invention, reference may be made to the corresponding process in the above-mentioned embodiment of the human-vehicle interaction method, which have the same beneficial effects as the above human-vehicle interaction method and will not be descried herein again.

Referring to FIG. 3, FIG. 3 exemplarily shows a main structure of an onboard intelligent control system in an embodiment. As shown in FIG. 3, the onboard intelligent control system in this embodiment comprises an acquisition apparatus 31, a control apparatus 32, and an actuation apparatus 33,
the acquisition apparatus 31 being configured to acquire vehicle sensor information and/or user behaviour information,
the control apparatus 32 being configured to send a control instruction to the actuation apparatus 33 based on the acquired vehicle sensor information and/or user behaviour information, and
the actuation apparatus 33 being configured to control action output and/or information output of an onboard intelligent controller of a vehicle according to the control instruction.

In this embodiment of the invention, the acquisition apparatus 31 may be a camera and/or a voice receiving apparatus, or a vehicle sensor provided in the onboard intelligent controller to observe an expression of a user, receive a voice of the user, and collect vehicle-related data. The control apparatus 32 may be an onboard control system such as an electronic control unit (ECU) or vehicle control unit (VCU) or an onboard computer system. The actuation apparatus 33 may be the screen, and/or the body, and/or the head of the onboard intelligent controller, and/or an onboard audio or speaker. Specifically, when the onboard intelligent controller interacts with the user according to the acquired information, the head of the onboard intelligent controller may be rotated to drive the rotation of the display screen, and corresponding text and a corresponding expression animation may be further displayed on the display screen, and/or a corresponding voice may be output to communicate with the user, or the like.

In a preferred embodiment of the invention, for the "action output and/or information output",
the action output comprises rotation of the screen, and/or the body, and/or the head of the onboard intelligent controller; and/or
the information output comprises an expression animation, and/or a voice, and/or text.

In practical applications, the onboard intelligent controller may be installed above the centre console screen of the vehicle and has a rotatable head. The head may be provided with a display screen, and the display screen can display text and expression information, and may have a voice output function or may be connected to a voice output apparatus, such as an onboard audio or speaker. When the onboard intelligent controller interacts with the user according to the acquired information and interaction strategy, the head of the onboard intelligent controller may be rotated to drive the rotation of the display screen, and corresponding text and a corresponding expression animation may be further displayed on the display screen, and/or a corresponding voice may be output to communicate with the user, or the like.

According to the invention, the control apparatus 32 further comprises a first control unit and a second control unit, wherein
the first control unit is configured to control, if an action of opening a vehicle door is detected and it is detected that a corresponding seat is occupied, the screen of the onboard intelligent controller to turn to the corresponding seat, and optionally display a preset farewell expression animation, and/or output preset farewell voice information, and/or output preset farewell text information; and
the second control unit is configured to control, if the action of opening the vehicle door is detected and it is detected that the corresponding seat is idle, the screen of the onboard intelligent controller to turn to the vehicle door, and optionally display a preset welcome expression animation, and/or output preset welcome voice information, and/or output preset welcome text information.

Specifically, the vehicle sensor information comprises vehicle door opening and closing information, and/or seat occupancy information, and/or multimedia information of the vehicle. Taking the vehicle door opening and closing information and the seat occupancy information as examples, the onboard intelligent controller may be connected to the vehicle door detection sensor and the seat occupancy sensor in a wired or wireless manner. Through acquiring data of the above sensors and analyzing a data change, a corresponding user behaviour is learned or directly acquired, to interact with the user. Specifically, when the onboard intelligent controller acquires data of the vehicle door detection sensor and learns that the vehicle door is opened through analysis, there may be three cases in which the user gets on the vehicle, gets off the vehicle, or stays in the seat. In order to further analyze the user behaviour information, the onboard intelligent controller may acquire data of the seat occupancy sensor. If the onboard intelligent controller learns that the data of the seat occupancy sensor is from an "occupied" state to an "idle" state through analysis, it may be learned that the user is about to get off the vehicle. In this case, the onboard intelligent controller may make a farewell to the user by combining a voice with an expression. Specifically, the farewell to the user may be made by a voice, and displaying a farewell expression on the onboard intelligent controller at the same time. If the onboard intelligent controller learns that the data of the seat occupancy sensor is from the "idle" state to the "occupied" state through analysis, it may be learned that the user is about to get on the vehicle. In this case, the onboard intelligent controller may welcome the user by combining a voice with an expression. For a specific form, reference may be made to the above farewell case, and details will not be descried herein again. If the onboard intelligent controller learns that the data of the seat occupancy sensor is always in the "occupied" state through analysis, it may be learned that the user just opened the vehicle door and did not get off the vehicle. In this case, the onboard intelligent controller may display a happy expression, to provide an intelligent and friendly user experience for the user.

In a preferred embodiment of the invention, the control apparatus 32 further comprises a third control unit configured to select and control, according to a rhythm and a style of music played by the vehicle, an expression animation on the screen of the onboard intelligent controller to be displayed according to a preset correspondence relationship.

Specifically, the multimedia information may be beat per minute (BPM) information and ID3 information (located in bytes at the beginning and the end of an MP3 file, with information such as a singer, a name, and a style of an MP3) of the music. The onboard intelligent control system may acquire relevant information of the music being played by the multimedia, analyze style information of the music being played, and display an expression animation corresponding to the music style on the screen of the onboard intelligent controller, so that the user can resonate with the expression animation while enjoying the music. In addition to the content recorded in this embodiment of the invention, the vehicle sensor information may further comprise information that can be acquired by those skilled in the art based on experience and capabilities, which is not limited herein.

In a preferred embodiment of the invention, the control apparatus 32 further comprises a fourth control unit configured to control, when it is detected that an object is approaching in a preset detection position, the screen of the onboard intelligent controller to turn to the preset detection position.

Specifically, a proximity sensor is installed under the centre console screen of the vehicle. When the user's hand or other objects approach the centre console screen, the onboard intelligent controller can control the screen to turn to the detection position, and may display a corresponding smiling face or expression animation on the screen to interact with the user. In this way, when the user controls the centre console screen, the user can have the feeling of interacting with an intelligent robot, thereby improving the user experience.

In a preferred embodiment of the invention, the control apparatus 32 further comprises a fifth control unit configured to:
control, when it is detected that the seat is occupied and the seat belt of the corresponding seat is not fastened during the travelling of the vehicle, the onboard intelligent controller to perform seat belt unfastened reminding, wherein
the seat belt unfastened reminding comprises: the screen of the onboard intelligent controller turns to the corresponding seat, and/or displays a preset seat belt reminding expression animation, and/or outputs preset seat belt reminding voice information, and/or outputs preset seat belt reminding text information.

In a preferred embodiment of the invention, the fifth control unit is further configured to:
control, when there are a plurality of seat belt unfastened reminding tasks, the onboard intelligent controller to perform seat belt unfastened reminding sequentially for a driver seat, a front passenger seat, and back seats from left to right or from right to left.

Specifically, the onboard intelligent controller may further detect sensor information related to the seat belt. When it is detected that the user has not fastened the seat belt, the onboard intelligent controller may use a voice to remind the user to fasten the seat belt, and play a seat belt reminding expression animation and corresponding reminding text information on the screen. In addition, the onboard intelligent controller may further rotate the head and turn the head to a user having not fastened a seat belt to further remind the user. When a plurality of users have not fastened seat belts, the users may be reminded sequentially for a driver seat, a front passenger seat, and back seats from left to right or from right to left until all the users have fastened the seat belts. The user is enabled in a relaxed and entertaining way to fasten the seat belt to ensure driving safety of the user.

Those skilled in the art should be able to realize that the method steps of the various examples described with reference to the embodiments disclosed herein can be implemented in electronic hardware, computer software or a combination of both. To clearly illustrate the interchangeability of electronic hardware and software, the compositions and steps of the various examples have been generally described in terms of functionality in the above description. Whether these functions are performed in electronic hardware or software depends on the specific application and design constraints of the technical solution.

It should be noted that, the terms "first", "second", and the like in the specification, claims, and accompanying drawings of the invention are intended to distinguish between similar objects, and are not intended to describe or indicate a particular order or sequence. It should be understood that the data termed in such a way are interchangeable in proper circumstances so that the embodiments of the invention described herein can be implemented in other orders than the order illustrated or described herein.

## Claims

1. A human-vehicle interaction method comprising:
controlling action output and/or information output of an onboard intelligent controller of a vehicle based on acquired vehicle sensor information and/or user behaviour information, so as to interact with a user;
**characterized in that**
the step of controlling action output and/or information output of an onboard intelligent controller of a vehicle based on acquired vehicle sensor information and/or user behaviour information comprises:
controlling, if an action of opening a vehicle door is detected and it is detected that a corresponding seat is occupied, a screen of the onboard intelligent controller to turn to the corresponding seat; and/or
controlling, if the action of opening the vehicle door is detected and it is detected that the corresponding seat is idle, the screen of the onboard intelligent controller to turn to the vehicle door.

2. The method according to claim 1, **characterized in that** for the "action output and/or information output",
the action output comprises rotation of the screen, and/or a body, and/or a head of the onboard intelligent controller; and/or
the information output comprises an expression animation, and/or a voice, and/or text.

3. The method according to claim 2, **characterized in that** the step of "controlling action output and/or information output of an onboard intelligent controller of a vehicle based on acquired vehicle sensor information and/or user behaviour information" comprises:
controlling, if an action of opening a vehicle door is detected and it is detected that a corresponding seat is occupied, the screen of the onboard intelligent controller to display a preset farewell expression animation, and/or output preset farewell voice information, and/or output preset farewell text information;
and/or controlling, if the action of opening the vehicle door is detected and it is detected that the corresponding seat is idle, the screen of the onboard intelligent controller to display a preset welcome expression animation, and/or output preset welcome voice information, and/or output preset welcome text information.

4. The method according to claim 3, **characterized in that** the step of "controlling action output and/or information output of an onboard intelligent controller of a vehicle based on acquired vehicle sensor information and/or user behaviour information" comprises:
selecting and controlling, according to a rhythm and a style of music played by the vehicle, an expression animation on the screen of the onboard intelligent controller to be displayed according to a preset correspondence relationship.

5. The method according to claim 4, **characterized in that** the step of "controlling action output and/or information output of an onboard intelligent controller of a vehicle based on acquired vehicle sensor information and/or user behaviour information" comprises:
controlling, when it is detected that an object is approaching in a preset detection position, the screen of the onboard intelligent controller to turn to the preset detection position.

6. The method according to claim 5, **characterized in that** the step of "controlling action output and/or information output of an onboard intelligent controller of a vehicle based on acquired vehicle sensor information and/or user behaviour information" comprises:
controlling, when it is detected that the seat is occupied and the seat belt of the corresponding seat is not fastened during the travelling of the vehicle, the onboard intelligent controller to perform seat belt unfastened reminding, wherein
the seat belt unfastened reminding comprises: the screen of the onboard intelligent controller turns to the corresponding seat, and/or displays a preset seat belt reminding expression animation, and/or outputs preset seat belt reminding voice information, and/or outputs preset seat belt reminding text information.

7. The method according to claim 6, **characterized in that** when there are a plurality of seat belt unfastened reminding tasks, the onboard intelligent controller is controlled to perform seat belt unfastened reminding sequentially for a driver seat, a front passenger seat, and back seats from left to right or from right to left.

8. An onboard intelligent control system comprising an acquisition apparatus (31), a control apparatus (32), and an actuation apparatus (33),
the acquisition apparatus (31) being configured to acquire vehicle sensor information and/or user behaviour information,
the control apparatus (32) being configured to send a control instruction to the actuation apparatus (33) based on the acquired vehicle sensor information and/or user behaviour information, and
the actuation apparatus (33) being configured to control action output and/or information output of an onboard intelligent controller of a vehicle according to the control instruction;
**characterized in that**
the control apparatus (32) further comprises a first control unit and a second control unit, wherein
the first control unit is configured to control, if an action of opening a vehicle door is detected and it is detected that a corresponding seat is occupied, a screen of the onboard intelligent controller to turn to the corresponding seat;
the second control unit is configured to control, if the action of opening the vehicle door is detected and it is detected that the corresponding seat is idle, the screen of the onboard intelligent controller to turn to the vehicle door.

9. The system according to claim 8, **characterized in that** for the "action output and/or information output",
the action output comprises rotation of the screen, and/or a body, and/or a head of the onboard intelligent controller; and/or
the information output comprises an expression animation, and/or a voice, and/or text.

10. The system according to claim 9, **characterized in that** the control apparatus (32) further comprises a first control unit and a second control unit, wherein
the first control unit is configured to control, if an action of opening a vehicle door is detected and it is detected that a corresponding seat is occupied, the screen of the onboard intelligent controller to display a preset farewell expression animation, and/or output preset farewell voice information, and/or output preset farewell text information; and
the second control unit is configured to control, if the action of opening the vehicle door is detected and it is detected that the corresponding seat is idle, the screen of the onboard intelligent controller to display a preset welcome expression animation, and/or output preset welcome voice information, and/or output preset welcome text information.

11. The system according to claim 10, **characterized in that** the control apparatus (32) further comprises a third control unit configured to select and control, according to a rhythm and a style of music played by the vehicle, an expression animation on the screen of the onboard intelligent controller to be displayed according to a preset correspondence relationship.

12. The system according to claim 11, **characterized in that** the control apparatus (32) further comprises a fourth control unit configured to control, when it is detected that an object is approaching in a preset detection position, the screen of the onboard intelligent controller to turn to the preset detection position.

13. The system according to claim 12, **characterized in that** the control apparatus (32) further comprises a fifth control unit configured to:
control, when it is detected that the seat is occupied and the seat belt of the corresponding seat is not fastened during the travelling of the vehicle, the onboard intelligent controller to perform seat belt unfastened reminding, wherein
the seat belt unfastened reminding comprises: the screen of the onboard intelligent controller turns to the corresponding seat, and/or displays a preset seat belt reminding expression animation, and/or outputs preset seat belt reminding voice information, and/or outputs preset seat belt reminding text information.

14. The system according to claim 13, **characterized in that** the fifth control unit is further configured to:
control, when there are a plurality of seat belt unfastened reminding tasks, the onboard intelligent controller to perform seat belt unfastened reminding sequentially for a driver seat, a front passenger seat, and back seats from left to right or from right to left.

## Patentansprüche

1. Verfahren zur Interaktion zwischen Mensch und Fahrzeug, Folgendes umfassend:
Steuern einer Aktionsausgabe und/oder einer Informationsausgabe einer fahrzeuginternen intelligenten Steuerung basierend auf erfassten Informationen von einem Fahrzeugsensor und/oder Informationen zum Benutzerverhalten, so dass mit einem Benutzer interagiert wird,
**dadurch gekennzeichnet, dass**
der Schritt des Steuerns einer Aktionsausgabe und/oder einer Informationsausgabe einer fahrzeuginternen intelligenten Steuerung basierend auf erfassten Informationen von einem Fahrzeugsensor und/oder Informationen zum Benutzerverhalten Folgendes umfasst:
Steuern eines Bildschirms der internen intelligenten Steuerung, sich zu einem entsprechenden Sitz zu drehen, wenn eine Aktion des Öffnens einer Fahrzeugtür erkannt wird und wenn erkannt wird, dass der entsprechende Sitz besetzt ist, und/oder
Steuern des Bildschirms der internen intelligenten Steuerung, sich zur Fahrzeugtür zu drehen, wenn die Aktion des Öffnens der Fahrzeugtür erkannt wird und wenn erkannt wird, dass der entsprechende Sitz leer ist.

2. Verfahren nach Anspruch 1, **dadurch gekennzeichnet, dass** für die "Aktionsausgabe und/oder Informationsausgabe"
die Aktionsausgabe das Drehen des Bildschirms und/oder eines Körpers und/oder eines Kopfes der internen intelligenten Steuerung umfasst und/oder
die Informationsausgabe eine Ausdrucksanimation und/oder Sprache und/oder Text umfasst.

3. Verfahren nach Anspruch 2, **dadurch gekennzeichnet, dass** der Schritt des "Steuerns einer Aktionsausgabe und/oder einer Informationsausgabe einer fahrzeuginternen intelligenten Steuerung basierend auf erfassten Informationen von einem Fahrzeugsensor und/oder Informationen zum Benutzerverhalten" Folgendes umfasst:
Steuern des Bildschirms der internen intelligenten Steuerung, eine voreingestellte Abschiedsausdrucksanimation anzuzeigen und/oder voreingestellte Abschiedssprachinformationen auszugeben und/oder voreingestellte Abschiedstextinformationen auszugeben, wenn eine Aktion des Öffnens einer Fahrzeugtür erkannt wird und wenn erkannt wird, dass ein entsprechender Sitz besetzt ist,
und/oder Steuern des Bildschirms der internen intelligenten Steuerung, eine voreingestellte Begrüßungsausdrucksanimation anzuzeigen und/oder voreingestellte Begrüßungssprachinformationen auszugeben und/oder voreingestellte Begrüßungstextinformationen auszugeben, wenn die Aktion des Öffnens der Fahrzeugtür erkannt wird und wenn erkannt wird, dass der entsprechende Sitz leer ist.

4. Verfahren nach Anspruch 3, **dadurch gekennzeichnet, dass** der Schritt des "Steuerns einer Aktionsausgabe und/oder einer Informationsausgabe einer fahrzeuginternen intelligenten Steuerung basierend auf erfassten Informationen von einem Fahrzeugsensor und/oder Informationen zum Benutzerverhalten" Folgendes umfasst:
Auswählen und Steuern einer Ausdrucksanimation auf dem Bildschirm der internen intelligenten Steuerung, die gemäß einem voreingestellten Übereinstimmungsverhältnis anzuzeigen ist, gemäß einem Rhythmus und Stil von Musik, die von dem Fahrzeug abgespielt wird.

5. Verfahren nach Anspruch 4, **dadurch gekennzeichnet, dass** der Schritt des "Steuerns einer Aktionsausgabe und/oder einer Informationsausgabe einer fahrzeuginternen intelligenten Steuerung basierend auf erfassten Informationen von einem Fahrzeugsensor und/oder Informationen zum Benutzerverhalten" Folgendes umfasst:
Steuern des Bildschirms der internen intelligenten Steuerung, sich in eine voreingestellte Erkennungsposition zu drehen, wenn erkannt wird, dass sich ein Objekt in der voreingestellten Erkennungsposition nähert.

6. Verfahren nach Anspruch 5, **dadurch gekennzeichnet, dass** der Schritt des "Steuerns einer Aktionsausgabe und/oder einer Informationsausgabe einer fahrzeuginternen intelligenten Steuerung basierend auf erfassten Informationen von einem Fahrzeugsensor und/oder Informationen zum Benutzerverhalten" Folgendes umfasst:
Steuern der internen intelligenten Steuerung, eine Erinnerung, dass der Sicherheitsgurt nicht angelegt ist, auszuführen, wenn erkannt wird, dass der Sitz besetzt ist und der Sicherheitsgurt des entsprechenden Sitzes während des Fahrens des Fahrzeugs nicht angelegt ist, wobei
die Erinnerung, dass der Sicherheitsgurt nicht angelegt ist, Folgendes umfasst: der Bildschirm der internen intelligenten Steuerung dreht sich zu dem entsprechenden Sitz und/oder zeigt eine voreingestellte Ausdrucksanimation zur Sicherheitsgurterinnerung an und/oder gibt voreingestellte Sprachinformationen zur Sicherheitsgurterinnerung aus und/oder gibt voreingestellte Textinformationen zur Sicherheitsgurterinnerung aus.

7. Verfahren nach Anspruch 6, **dadurch gekennzeichnet, dass** die interne intelligente Steuerung gesteuert wird, eine Erinnerung, dass der Sicherheitsgurt nicht angelegt ist, nacheinander für einen Fahrersitz, einen Beifahrersitz und Rücksitze von links nach rechts oder von rechts nach links auszuführen, wenn mehrere Aufgaben zur Erinnerung, dass der Sicherheitsgurt nicht angelegt ist, auszuführen sind.

8. Internes intelligentes Steuersystem, eine Erfassungsvorrichtung (31), eine Steuervorrichtung (32) und eine Betätigungsvorrichtung (33) umfassend, wobei:
die Erfassungsvorrichtung (31) dafür konfiguriert ist, Informationen von einem Fahrzeugsensor und/oder Informationen zum Benutzerverhalten zu erfassen,
die Steuervorrichtung (32) dafür konfiguriert ist, basierend auf den erfassten Informationen von dem Fahrzeugsensor und/oder Informationen zum Benutzerverhalten eine Steueranweisung an die Betätigungsvorrichtung (33) zu senden, und
die Betätigungsvorrichtung (33) dafür konfiguriert ist, eine Aktionsausgabe und/oder eine Informationsausgabe einer fahrzeuginternen intelligenten Steuerung gemäß der Steueranweisung auszuführen,
**dadurch gekennzeichnet, dass**
die Steuervorrichtung (32) ferner eine erste Steuereinheit und eine zweite Steuereinheit umfasst, wobei
die erste Steuereinrichtung dafür konfiguriert ist, einen Bildschirm der internen intelligenten Steuerung zu steuern, sich zu einem entsprechenden Sitz zu drehen, wenn eine Aktion des Öffnens einer Fahrzeugtür erkannt wird und wenn erkannt wird, dass ein entsprechender Sitz besetzt ist,
die zweite Steuereinrichtung dafür konfiguriert ist, den Bildschirm der internen intelligenten Steuerung zu steuern, sich zur Fahrzeugtür zu drehen, wenn die Aktion des Öffnens der Fahrzeugtür erkannt wird und wenn erkannt wird, dass der entsprechende Sitz leer ist.

9. System nach Anspruch 8, **dadurch gekennzeichnet, dass** für die "Aktionsausgabe und/oder Informationsausgabe"
die Aktionsausgabe das Drehen des Bildschirms und/oder eines Körpers und/oder eines Kopfes der internen intelligenten Steuerung umfasst und/oder
die Informationsausgabe eine Ausdrucksanimation und/oder Sprache und/oder Text umfasst.

10. System nach Anspruch 9, **dadurch gekennzeichnet, dass** die Steuervorrichtung (32) ferner eine erste Steuereinheit und eine zweite Steuereinheit umfasst, wobei
die erste Steuereinheit dafür konfiguriert ist, den Bildschirm der internen intelligenten Steuerung zu steuern, eine voreingestellte Abschiedsausdrucksanimation anzuzeigen und/oder voreingestellte Abschiedssprachinformationen auszugeben und/oder voreingestellte Abschiedstextinformationen auszugeben, wenn eine Aktion des Öffnens einer Fahrzeugtür erkannt wird und wenn erkannt wird, dass ein entsprechender Sitz besetzt ist, und
die zweite Steuereinheit dafür konfiguriert ist, den Bildschirm der internen intelligenten Steuerung zu steuern, eine voreingestellte Begrüßungsausdrucksanimation anzuzeigen und/oder voreingestellte Begrüßungssprachinformationen auszugeben und/oder voreingestellte Begrüßungstextinformationen auszugeben, wenn die Aktion des Öffnens der Fahrzeugtür erkannt wird und wenn erkannt wird, dass der entsprechende Sitz leer ist.

11. System nach Anspruch 10, **dadurch gekennzeichnet, dass** die Steuervorrichtung (32) ferner eine dritte Steuereinheit umfasst, die dafür konfiguriert ist, eine Ausdrucksanimation auf dem Bildschirm der internen intelligenten Steuerung, welche gemäß einem voreingestellten Übereinstimmungsverhältnis anzuzeigen ist, gemäß einem Rhythmus und Stil von Musik, die von dem Fahrzeug abgespielt wird, auszuwählen und zu steuern.

12. System nach Anspruch 11, **dadurch gekennzeichnet, dass** die Steuervorrichtung (32) ferner eine vierte Steuereinheit umfasst, die dafür konfiguriert ist, den Bildschirm der internen intelligenten Steuerung zu steuern, sich in eine voreingestellte Erkennungsposition zu drehen, wenn erkannt wird, dass sich ein Objekt in der voreingestellten Erkennungsposition nähert.

13. System nach Anspruch 12, **dadurch gekennzeichnet, dass** die Steuervorrichtung (32) ferner eine fünfte Steuereinheit umfasst, die für Folgendes konfiguriert ist:
Steuern der internen intelligenten Steuerung, eine Erinnerung auszuführen, dass der Sicherheitsgurt nicht angelegt ist, wenn erkannt wird, dass der Sitz besetzt ist und der Sicherheitsgurt des entsprechenden Sitzes während des Fahrens des Fahrzeugs nicht angelegt ist, wobei
die Erinnerung, dass der Sicherheitsgurt nicht angelegt ist, Folgendes umfasst: der Bildschirm der internen intelligenten Steuerung dreht sich zu dem entsprechenden Sitz und/oder zeigt eine voreingestellte Ausdrucksanimation zur Sicherheitsgurterinnerung an und/oder gibt voreingestellte Sprachinformationen zur Sicherheitsgurterinnerung aus und/oder gibt voreingestellte Textinformationen zur Sicherheitsgurterinnerung aus.

14. System nach Anspruch 13, **dadurch gekennzeichnet, dass** die fünfte Steuereinheit ferner für Folgendes konfiguriert ist:
Steuern der internen intelligenten Steuerung, eine Erinnerung, dass der Sicherheitsgurt nicht angelegt ist, nacheinander für einen Fahrersitz, einen Beifahrersitz und Rücksitze von links nach rechts oder von rechts nach links auszuführen, wenn mehrere Aufgaben zur Erinnerung, dass der Sicherheitsgurt nicht angelegt ist, anstehen.

## Revendications

1. Procédé d'interaction de véhicule humain comprenant :
la commande d'une émission d'actions et/ou d'une émission d'informations d'un contrôleur intelligent embarqué d'un véhicule sur la base d'informations de capteur de véhicule acquises et/ou d'informations comportementales d'utilisateur, de façon à interagir avec un utilisateur ;
**caractérisé en ce que**
l'étape de commande d'une émission d'actions et/ou d'une émission d'informations d'un contrôleur intelligent embarqué d'un véhicule sur la base d'informations de capteur de véhicule acquises et/ou d'informations comportementales d'utilisateur comprend :
la commande, si on détecte une action d'ouverture d'une porte de véhicule, et que l'on détecte qu'un siège correspondant est occupé, à un écran du contrôleur intelligent embarqué de tourner vers le siège correspondant ; et/ou
la commande, si on détecte l'action d'ouverture de la porte du véhicule et qu'on détecte que le siège correspondant est libre, à l'écran du contrôleur intelligent embarqué de tourner vers la porte du véhicule.

2. Procédé selon la revendication 1, **caractérisé en ce que** pour « l'émission d'actions et/ou l'émission d'informations »,
l'émission d'actions comprend une rotation de l'écran, et/ou d'un corps, et/ou d'une tête du contrôleur intelligent embarqué ; et/ou
l'émission d'informations comprend une animation d'expression, et/ou une voix, et/ou un texte.

3. Procédé selon la revendication 2, **caractérisé en ce que** l'étape de « commande d'une émission d'actions et/ou d'une émission d'informations d'un contrôleur intelligent embarqué d'un véhicule sur la base d'informations de capteur de véhicule acquises et/ou d'informations comportementales d'utilisateur » comprend :
la commande, si on détecte une action d'ouverture d'une porte du véhicule et qu'on détecte qu'un siège correspondant est occupé, à l'écran du contrôleur intelligent embarqué d'afficher une animation d'expression d'adieu prédéfinie, et/ou d'émettre des informations vocales d'adieu prédéfinies et/ou d'émettre des informations textuelles d'adieu prédéfinies ;
et/ou la commande, si on détecte l'action d'ouverture de la porte du véhicule et qu'on détecte que le siège correspondant est libre, à l'écran du contrôleur intelligent embarqué d'afficher une animation d'expression de bienvenue prédéfinie et/ou d'émettre des informations vocales de bienvenue prédéfinies et/ou d'émettre des informations textuelles de bienvenue prédéfinies.

4. Procédé selon la revendication 3, **caractérisé en ce que** l'étape de « commande d'une émission d'actions et/ou d'une émission d'informations d'un contrôleur intelligent embarqué d'un véhicule sur la base d'informations de capteur de véhicule acquises et/ou d'informations comportementales d'utilisateur » comprend :
la sélection et la commande, en fonction d'un rythme et d'un style de musique jouée par le véhicule, d'une animation d'expression sur l'écran du contrôleur intelligent embarqué à afficher en fonction d'une relation de correspondance prédéfinie.

5. Procédé selon la revendication 4, **caractérisé en ce que** l'étape de « commande d'une émission d'actions et/ou d'une émission d'informations d'un contrôleur intelligent embarqué d'un véhicule sur la base d'informations de capteur de véhicule acquises et/ou d'informations comportementales d'utilisateur » comprend :
la commande, lorsqu'on détecte qu'un objet s'approche dans une position de détection prédéfinie, à l'écran du contrôleur intelligent embarqué de tourner vers la position de détection prédéfinie.

6. Procédé selon la revendication 5, **caractérisé en ce que** l'étape de « commande d'une émission d'actions et/ou d'une émission d'informations d'un contrôleur intelligent embarqué d'un véhicule sur la base d'informations de capteur de véhicule acquises et/ou d'informations comportementales d'utilisateur » comprend :
la commande, lorsqu'on détecte que le siège est occupé et que la ceinture de sécurité du siège correspondant n'est pas attachée pendant le déplacement du véhicule, au contrôleur intelligent embarqué d'exécuter un rappel de ceinture de sécurité non attachée,
le rappel de ceinture de sécurité non attachée comprenant : l'écran du contrôleur intelligent embarqué tourne vers le siège correspondant, et/ou affiche une animation d'expression de rappel de ceinture de sécurité prédéfinie et/ou émet des informations vocales de rappel de ceinture de sécurité prédéfinies et/ou émet des informations textuelles de rappel de ceinture de sécurité prédéfinies.

7. Procédé selon la revendication 6, **caractérisé en ce que** lorsqu'il existe une pluralité de tâches de rappel de ceinture de sécurité non attachée, on commande au contrôleur intelligent embarqué d'exécuter un rappel de ceinture de sécurité non attachée de manière séquentielle pour un siège conducteur, un siège avant passager, et des sièges arrière de gauche à droite ou de droite à gauche.

8. Système de commande intelligent embarqué comprenant un appareil d'acquisition (31), un appareil de commande (32) et un appareil d'actionnement (33),
l'appareil d'acquisition (31) étant configuré pour acquérir des informations de capteur de véhicule et/ou des informations comportementales d'utilisateur,
l'appareil de commande (32) étant configuré pour envoyer une instruction de commande à l'appareil d'actionnement (33) sur la base des informations de capteur de véhicule acquises et/ou des informations comportementales d'utilisateur, et
l'appareil d'actionnement (33) étant configuré pour commander une émission d'actions et/ou une émission d'informations d'un contrôleur intelligent embarqué d'un véhicule en fonction de l'instruction de commande ;
**caractérisé en ce que**
l'appareil de commande (32) comprend en outre une première unité de commande et une deuxième unité de commande,
la première unité de commande étant configurée pour commander, si on détecte une action d'ouverture d'une porte du véhicule et qu'on détecte qu'un siège correspondant est occupé, à un écran du contrôleur intelligent embarqué de tourner vers le siège correspondant ;
la deuxième unité de commande est configurée pour commander, si on détecte l'action d'ouverture de la porte du véhicule et qu'on détecte que le siège correspondant est libre, à l'écran du contrôleur intelligent embarqué de tourner vers la porte du véhicule.

9. Système selon la revendication 8, **caractérisé en ce que** pour « l'émission d'actions et/ou l'émission d'informations »,
l'émission d'actions comprend la rotation de l'écran et/ou d'un corps et/ou d'une tête du contrôleur intelligent embarqué ; et/ou
l'émission d'informations comprend une animation d'expression et/ou une voix et/ou un texte.

10. Système selon la revendication 9, **caractérisé en ce que** l'appareil de contrôle (32) comprend en outre une première unité de commande et une deuxième unité de commande,
la première unité de commande étant configurée pour commander, si on détecte une action d'ouverture d'une porte du véhicule et qu'on détecte qu'un siège correspondant est occupé, à l'écran du contrôleur intelligent embarqué d'afficher une animation d'expression d'adieu prédéfinie, et/ou d'émettre des informations vocales d'adieu prédéfinies et/ou d'émettre des informations textuelles d'adieu prédéfinies ; et
la deuxième unité de commande étant configurée pour commander, si on détecte l'action d'ouverture de la porte du véhicule et qu'on détecte que le siège correspondant est libre, à l'écran du contrôleur intelligent embarqué d'afficher une animation d'expression de bienvenue prédéfinie et/ou d'émettre des informations vocales de bienvenue prédéfinies et/ou d'émettre des informations textuelles de bienvenue prédéfinies.

11. Système selon la revendication 10, **caractérisé en ce que** l'appareil de commande (32) comprend en outre une troisième unité de commande configurée pour sélectionner et commander, en fonction d'un rythme et d'un style de musique jouée par le véhicule, une animation d'expression sur l'écran du contrôleur intelligent embarqué à afficher en fonction d'une relation de correspondance prédéfinie.

12. Système selon la revendication 11, **caractérisé en ce que** l'appareil de commande (32) comprend en outre une quatrième unité de commande configurée pour commander, lorsqu'on détecte qu'un objet s'approche dans une position de détection prédéfinie, à l'écran du contrôleur intelligent embarqué de tourner vers la position de détection prédéfinie.

13. Système selon la revendication 12, **caractérisé en ce que** l'appareil de commande (32) comprend en outre une cinquième unité de commande configurée pour :
commander, lorsqu'on détecte que le siège est occupé et que la ceinture de sécurité du siège correspondant n'est pas attachée pendant le déplacement du véhicule, au contrôleur intelligent embarqué d'exécuter un rappel de ceinture de sécurité non attachée,
le rappel de ceinture de sécurité non attachée comprenant : l'écran du contrôleur intelligent embarqué tourne vers le siège correspondant, et/ou affiche une animation d'expression de rappel de ceinture de sécurité prédéfinie et/ou émet des informations vocales de rappel de ceinture de sécurité prédéfinies et/ou émet des informations textuelles de rappel de ceinture de sécurité prédéfinies.

14. Système selon la revendication 13, **caractérisé en ce que** la cinquième unité de commande est configurée en outre pour :
commander, lorsqu'il existe une pluralité de tâches de rappel de ceinture de sécurité non attachée, au contrôleur intelligent embarqué d'exécuter un rappel de ceinture de sécurité non attachée de manière séquentielle pour un siège conducteur, un siège avant passager, et des sièges arrière de gauche à droite ou de droite à gauche.
